# EUROPÄISCHE PATENTSCHRIFT

(11) **EP 2 385 410 B1**
(45) Veröffentlichungstag und Bekanntmachung des Hinweises auf die Patenterteilung: **26.10.2016**
(21) Anmeldenummer: 11158343.1
(22) Anmeldetag: 15.03.2011
(51) Int. Cl.: G02B 23/18, G02B 23/12

(54) **Verbindungsbrücke für zwei optische Vorrichtungen**
Connecting bridge for two optical devices
Pont de liaison pour deux dispositifs optiques

(30) Priorität: 03.05.2010 DE 102010016761
(43) Veröffentlichungstag der Anmeldung: 09.11.2011
(73) Patentinhaber: SCHMIDT & BENDER GmbH & Co. KG, 35444 Biebertal (DE)
(72) Erfinder: vom Hagen, Christoph Hilmar, 35390, Gießen (DE); Müller, Sven Roman, 35310, Butzbach (DE); Schmitt, Werner, 35435 Wettenberg (DE); Zöllmann, Alexander, 35423, Lich (DE)
(74) Vertreter: Patentanwälte Olbricht Buchhold Keulertz

(56) Entgegenhaltungen:
- EP-A1- 1 783 529
- EP-A1- 2 065 742
- US-A- 5 535 053
- US-A- 5 703 354
- US-B1- 6 687 053
- ANONYMOUS: 'OTIS-14 user's guide' AMERICAN TECHNOLOGIES NETWORK, [Online] 11 September 2008, Seite 8PP, XP055113406 Gefunden im Internet: <URL:http://dl.owneriq.net/6/69533b3d-37a6- 412d-aa61-e737e04b41d9.pdf> [gefunden am 2014-04-10]

## Beschreibung

Die Erfindung betrifft eine Verbindungsbrücke zur Verbindung von zwei optischen Vorrichtungen. Dabei ist die Verbindungsbrücke mit jeweils mindestens einer Kupplungsvorrichtung für jede optische Vorrichtung ausgestattet, die es neben der mechanischen Kupplung ermöglicht, elektronische Signale zu übertragen und/oder eine elektrische Verbindung herzustellen.

Derartige Verbindungsbrücken sind grundsätzlich bekannt für optische Vorrichtungen in Form von Vergrößerungsgläsern, bzw. Ferngläsern. Diese bekannten Verbindungsbrücken sind üblicherweise fest mit dem jeweiligen Fernrohr verbunden, so dass eine Einheit aus zwei Fernrohren und einer Verbindungsbrücke besteht. Nachteilig bei den bekannten Verbindungsbrücken ist die mangelnde Flexibilität im Einsatz. So ist es nicht möglich, je nach Einsatzsituation unterschiedliche optische Vorrichtungen zu verwenden, bzw. unterschiedliche optische Vorrichtungen miteinander zu kombinieren. Ähnliche Brücken sind grundsätzlich auch für Nachtsichtgeräte bekannt, die als mechanische Verbindung zwischen zwei, zum Beispiel als Restlichtverstärker ausgebildeten, optischen Vorrichtungen dienen. Auch hier besteht durch die feste Verbindung zwischen den Restlichtverstärken und der Verbindungsbrücke ein erheblicher Mangel an Flexibilität im Einsatz.

Aufgabe der vorliegenden Erfindung ist es nun die Nachteile bekannter Vorrichtungen zu beheben. Insbesondere ist es Aufgabe der vorliegenden Erfindung eine Verbindungsbrücke zur Verfügung zu stellen, die hinsichtlich verschiedener Einsatzsituationen einen hohen Grad an Flexibilität aufweist.

Gelöst wird diese Aufgabe durch eine Verbindungsbrücke mit den Merkmalen des unabhängigen Anspruchs 1 sowie durch ein optisches System mit den Merkmalen des unabhängigen Anspruchs 12. Vorteilhafte Ausgestaltungen der Erfindung ergeben sich aus den an die unabhängigen Ansprüche anschließenden Unteransprüchen.

Eine erfindungsgemäße Verbindungsbrücke ist dabei zur Verbindung von zwei optischen Vorrichtungen ausgestaltet. Dies beruht auf der Tatsache, dass die erfindungsgemäße Verbindungsbrücke hauptsächlich bei Menschen zum Einsatz kommen soll.

Die erfindungsgemäße Verbindungsbrücke weist dabei wenigstens eine Kupplungsvorrichtung für jede optische Vorrichtung zur Kupplung der jeweiligen optischen Vorrichtung an die Verbindungsbrücke auf. Diese Kupplungsvorrichtung dient also dem reversiblen An- und Abkuppeln der jeweiligen optischen Vorrichtung an die Verbindungsbrücke. Auf diese Weise kann ein flexibles optisches System geschaffen werden, in welchem durch die Funktionalität der erfindungsgemäßen Verbindungsbrücke unterschiedliche optische Vorrichtungen miteinander flexibel kombiniert werden können. So ist es neben der Kombination gleichartiger Nachtsichtgeräte auch möglich die jeweilige optische Vorrichtung an unterschiedliche Sehstärken eines Benutzers anzupassen. Auch ist es möglich, optische Vorrichtungen zu kombinieren, die auf unterschiedlichen physikalischen Methoden beruhen. Beispielsweise ist eine Kombination aus einem Restlichtverstärker und einer Infrarotkamera denkbar, so dass der Benutzer auf jedem Auge zwar den gleichen Bildausschnitt der Realität, allerdings mit unterschiedlichen Ausprägungen, bzw. Verarbeitungsstufen sieht. Der Informationsgehalt eines optischen Systems kann also durch die Verwendung einer erfindungsgemäßen Verbindungsbrücke flexibel an die Einsatzsituation angepasst werden.

Die Kupplungsvorrichtung weist dabei sowohl mechanische Kupplungsmittel, als auch elektronische Kupplungsmittel auf, die derart angeordnet sind, dass die elektronischen Kupplungsmittel einen elektronischen Kontakt zwischen der Verbindungsbrücke und der jeweiligen optischen Vorrichtung herstellen, wenn mittels der mechanischen Kupplungsmittel ein mechanischer Kontakt zwischen der jeweiligen optischen Vorrichtung und der Verbindungsbrücke hergestellt ist. Mit anderen Worten handelt es sich bei der elektronischen Kopplung um einen Automatismus, der direkt mit der mechanischen Kupplung einhergeht. Dies hat den Vorteil, dass der Benutzer keine separate elektronische Verbindung herstellen muss, sondern bereits durch das mechanische Kuppeln die gewünschte Einsatzbereitschaft erzielt. Dabei kann dies zum Beispiel durch die Formgebung und die Anordnung der Kupplungsmittel zueinander erfolgen. Die Kupplung ist dabei sowohl in mechanischer Hinsicht, als auch in elektronischer Hinsicht reversibel. Das bedeutet, dass beliebig häufig optische Vorrichtungen an die Verbindungsbrücke angekoppelt und auch wieder abgekoppelt werden können.

Unter elektronische Kupplung ist dabei sozusagen ein intelligentes Kuppeln zu verstehen. Dies kann zum Beispiel die Möglichkeit beinhalten, elektronische Signale über die elektronischen Kupplungsmittel auszutauschen. Auch ist es denkbar, dass alternativ oder zusätzlich über die elektronischen Kupplungsmittel eine elektrische Verbindung hergestellt wird, über die Strom übertragen werden kann, also ein Stromkreis gebildet wird.

Hinsichtlich der mechanischen Kupplungsmittel sind unterschiedliche Ausführungsformen denkbar. So ist es möglich, dass die mechanische Kupplung durch einen Formschluss erzielt werden kann. Auch andere Mechanismen, wie zum Beispiel eine Klemmverbindung oder eine magnetische Kupplung sind denkbar.

Weiter ist bei einer erfindungsgemäßen Verbindungsbrücke eine Verbindungsvorrichtung vorgesehen, die sich zumindest abschnittsweise zwischen den Kupplungsvorrichtungen für die jeweilige optische Vorrichtung erstreckt und diese mechanisch miteinander verbindet. Die mechanische Verbindung kann dabei zum Beispiel durch eine Verbindungsvorrichtung erzielt werden die als Fachwerkrahmen oder als stabiles Gehäuse ausgeführt ist. Unter mechanischer Verbindung ist dabei zu verstehen, dass zumindest teilweise eine kraftschlüssige Verbindung zwischen den Kupplungsvorrichtungen und der Verbindungsvorrichtung hergestellt ist.

Um die über die elektronische Kupplung austauschbaren Signale auswerten zu können, ist bei einer erfindungsgemäßen Verbindungsbrücke vorteilhafter Weise eine Auswertevorrichtung vorgesehen, die mit den elektronischen Kupplungsmitteln elektronisch verbunden ist und mit diesen elektronische Signale austauschen und/oder eine elektrische Verbindung zwischen den elektronischen Kupplungsmitteln der Kupplungsvorrichtungen herstellen kann.

Die Auswertung von Signalen kann dabei zum Beispiel in der Aufbereitung von Signalen und deren Interpretation liegen. So ist es möglich, dass Spannungssignale von den Batterien der optischen Vorrichtungen empfangen werden und diese hinsichtlich des aktuellen Ladezustandes der jeweiligen Batterie ausgewertet werden. Die Auswertevorrichtung ist bei einer solchen Ausführungsform in der Lage den jeweiligen Batterieladezustand der optischen Vorrichtungen zu erkennen und sogar zu bewerten. Ist die Auswertevorrichtung darüber hinaus derart ausgestaltet, dass eine elektrische Verbindung zwischen den elektronischen Kupplungsmitteln der Kupplungsvorrichtungen hergestellt werden kann, so kann in einer Situation in welcher der Ladezustand der Batterie der ersten optischen Vorrichtung als kritisch ausgewertet wird, eine elektrische Verbindung zu der Batterie der zweiten optischen Vorrichtung über die elektronischen Kupplungsmittel hergestellt werden. Beide optischen Vorrichtungen werden auf diese Weise mit der Energie einer einzigen Batterie versorgt. Die Funktionalität des gesamten optischen Systems bleibt damit für eine längere Zeit voll erhalten.

Es ist jedoch auch möglich, dass die Auswertevorrichtung andere oder weitere Auswertungen von Signalen vornimmt. Zum Beispiel kann die aktuelle optische Situation, also bei der Verwendung von Nachtsichtgeräten zum Beispiel die vorhandene Restlichtmenge von den optischen Vorrichtungen als Signal empfangen werden und in Abhängigkeit von der Restlichtmenge ein anderer Verstärkermodus gewählt oder eine Infrarotlampe hinzugeschaltet werden. Durch die Auswertevorrichtung und die elektronischen Kupplungsmittel wird es durch eine erfindungsgemäße Verbindungsbrücke möglich, diese intelligenter zu machen und den Benutzer bei der Nutzung der optischen Vorrichtungen zu unterstützen.

Um die Flexibilität einer erfindungsgemäßen Verbindungsbrücke noch weiter zu erhöhen, kann es vorteilhaft sein, wenn die Verbindungsvorrichtung über zumindest ein Rotationsgelenk mit wenigstens einer der Kupplungsvorrichtungen derart verbunden ist, dass die derart verbundene Kupplungsvorrichtung zumindest teilweise um die Rotationsachse des Rotationsgelenks relativ zur Verbindungsvorrichtung rotieren kann. Auf diese Weise ist die Position der jeweiligen Kupplungsvorrichtung und damit auch der damit gekuppelten optischen Vorrichtung relativ zur Verbindungsvorrichtung flexibel einstellbar.

Zum Beispiel kann auf diese Weise der Abstand der beiden optischen Vorrichtungen zueinander in Grenzen variiert werden. Dies ist dann sinnvoll, wenn unterschiedliche Augenabstände unterschiedlicher Benutzer ausgeglichen werden sollen. Je nach Rotationsgrad kann auch ein vollständiges Wegklappen der jeweiligen optischen Vorrichtung durch eine solche Ausführungsform möglich sein. Dies ist zum Beispiel bei optischen Vorrichtungen in Form von Nachtsichtgeräten sinnvoll, wenn in einem Einsatz zwischen unterschiedlich hellen Gebieten schnell gewechselt wird.

Bewegt sich der Benutzer aus einem dunklen Bereich, in welchem er auf die optischen Vorrichtungen, also die Nachtsichtgeräte, angewiesen ist, in einen hellen Bereich, also zum Beispiel den Raum eines Hauses, so kann er durch die mögliche Rotationsbewegung schnell das Nachtsichtgerät aus seinem Blickfeld schwenken. Auf diese Weise ist ein kurzfristiges Wechseln zwischen einem Blickfeld mit optischer Vorrichtung und ohne optische Vorrichtung möglich.

Alternativ oder zusätzlich zu einer Verbindung über ein Rotationsgelenk kann es vorteilhaft sein, wenn bei einer erfindungsgemäßen Verbindungsbrücke die Verbindungsvorrichtung über zumindest ein Translationsmittel mit wenigstens einer der Kupplungsvorrichtungen derart verbunden ist, dass der Abstand der derart verbundenen Kupplungsvorrichtung zu der Verbindungsvorrichtung variierbar ist. Eine translatorische Verstellmöglichkeit ist insbesondere dann sinnvoll, wenn relativ große Abstandsunterschiede ermöglicht werden sollen. Daher ist der Einsatz eines Translationsmittels insbesondere bei der Anpassung an unterschiedliche Augenabstände unterschiedlicher Benutzer sinnvoll.

Die Translationsmittel können dabei bei besonderen Einsatzformen mit dem Rotationsgelenk gemeinsam ausgebildet sein, so dass eine gemischte Bewegung der jeweiligen Kupplungsvorrichtung und damit auch der jeweiligen gekuppelten optischen Vorrichtung, also eine Mischung aus Rotation und Translation möglich wird. Damit können auch komplexere Bewegungsmöglichkeiten der jeweiligen Kupplungsvorrichtung und damit auch der jeweiligen optischen Vorrichtung ermöglicht werden.

Die Translationsmittel können dabei zum Beispiel in Form einer Linearführung ausgebildet sein. Dabei kann ein Schlitten, der mit der Kupplungsvorrichtung verbunden ist, auf einer mit der Verbindungsvorrichtung verbundenen Schiene verschoben werden. Eine solche Schiene kann dabei sowohl entlang einer Gerade, als auch entlang einer gekrümmten Linie verlaufen. Alternativ kann auch eine Hebelkinematik vorgesehen sein, die eine translatorische Bewegung der jeweiligen Kupplungsvorrichtung relativ zur Verbindungsvorrichtung erlaubt. Eine solche Hebelkinematik kann zum Beispiel aus einer Mehrzahl von rotatorisch gelagerten Hebeln ausgebildet sein.

Bei einer weiteren Ausführungsform der vorliegenden Erfindung kann es vorteilhaft sein, wenn das elektronische Kupplungsmittel und das mechanische Kupplungsmittel wenigstens einer Kupplungsvorrichtung zumindest teilweise integral miteinander ausgeführt sind. Eine derartige Ausbildung hat den Vorteil, dass durch die integrale Ausführung der beiden funktionalen Elemente der elektronischen Kupplungsmittel und der mechanischen Kupplungsmittel das Gesamtgewicht der beiden Mittel reduziert werden kann.

Auf diese Weise kann auch das Gesamtgewicht der Verbindungsbrücke, und damit auch das Gesamtgewicht eines damit ausgestatteten optischen Systems verringert werden. Insbesondere bei optischen Systemen, die an einem Helm befestigt direkt vom Benutzer getragen werden sollen, ist eine solche Gewichtsreduzierung eine Erhöhung des Nutzungskomforts. Ein weiterer Vorteil bei der integralen Ausführungsform ist die besonders einfache Ausgestaltung der abhängigen Kupplung der elektronischen Kupplungsmittel. So können Abschnitte und/oder Flächen, die der mechanischen Kupplung dienen gleichzeitig, sozusagen als Doppelnutzung, auch zur elektronischen Kupplung verwendet werden.

Eine für bestimmte Einsätze besonders geeignete Ausführungsform der mechanischen Kupplungsmittel einer erfindungsgemäßen Verbindungsbrücke kann die wenigstens abschnittsweise Ausbildung als Schwalbenschwanzführung sein. Eine solche Schwalbenschwanzführung ist dabei mit Hinterschneidungen versehen, die spitzwinklig ausgeführt sind und mit einem entsprechenden Schwalbenschwanzprofil mechanisch zusammenwirken können. Ein solches mechanisches Zusammenwirken ist zum Beispiel durch einen Reibschluß oder auch durch einen Formschluss möglich.

Dabei ist darauf hinzuweisen, dass die Schwalbenschwanzführung auch an der jeweiligen optischen Vorrichtung und das korrespondierende Schwalbenschwanzprofil an dem jeweiligen Kupplungsmittel vorgesehen ist. Ein besonderer Vorteil der Verwendung einer Schwalbenschwanzführung und eines entsprechenden Schwalbenschwanzprofils ist das besonders einfache mechanische Kuppeln. So kann das Schwalbenschwanzprofil in die entsprechende Schwalbenschwanzführung eingeschoben werden, wodurch bereits die mechanische Kupplung, also die Möglichkeit der Kraftübertragung ausgebildet wird. Eine solche mechanische Kupplung lässt nämlich nur einen einzigen Freiheitsgrad hinsichtlich Relativbewegung zwischen der optische Vorrichtung und dem mechanischen Kupplungsmittel zu. Dieser kann in die Einschieberichtung mit einem Anschlag versehen werden, so dass die optische Vorrichtung bei Einschieben in das mechanische Kupplungsmittel in Kontakt tritt. Damit ist eine Endposition, bzw. eine Einsatzposition der optischen Vorrichtung definiert. Für hohe mechanische Beanspruchungen kann auch der letzte Freiheitsgrad an Bewegung, durch eine Sicherung gegen das Herausziehen, bzw. Herausschieben der optischen Vorrichtung aus dem mechanischen Kupplungsmittel vorgesehen werden und die optische Vorrichtung damit in dem mechanischen Kupplungsmittel arretiert werden.

Eine solche Arretierung kann nicht nur bei Ausführungsformen mit Schwalbenschwanzführung, sondern grundsätzlich bei einer erfindungsgemäßen Verbindungsbrücke vorteilhaft sein. So können Fixiermittel vorgesehen sein zum Fixieren der mechanischen Kupplungsmittel wenigstens einer Kupplungsvorrichtung in deren mit der jeweiligen optischen Vorrichtung gekoppelten Zustand. Die Fixiermittel sind dabei als reversible Fixiermittel ausgeführt und an die Konstruktion der mechanischen Kupplungsmittel angepasst. Je nach Art der mechanischen Kupplungsmittel werden die notwendige Anzahl der durch die Kupplungsmittel vorgegebenen und nach der Kupplung verbliebenen Freiheitsgrade abgesichert und damit die optische Vorrichtung statisch bestimmt in dem mechanischen Kupplungsmittel gelagert. Zum Beispiel ist das Vorsehen einer Arretierplatte denkbar, welche je nach Rotationsposition den letzten Freiheitsgrad der optischen Vorrichtung in Bezug auf die mechanischen Kupplungsmittel nimmt. Vorteilhaft kann es auch sein, wenn die Fixiermittel zentral für alle mechanischen Kupplungsmittel aller Kupplungsvorrichtungen vorgesehen sind. Auf diese Weise ist neben einer Gewichtsreduktion auch eine Verbesserung der Nutzung möglich, da nur ein einziger Arretierungsschritt, also ein einziger Fixierungsschritt durchgeführt werden muss. Dabei kann die Adaptionsgeschwindigkeit der flexiblen Nutzung einer erfindungsgemäßen Verbindungsbrücke weiter erhöht werden.

Die elektronischen Kupplungsmittel einer erfindungsgemäßen Verbindungsbrücke können dabei zumindest abschnittsweise durch Kontaktflächen gebildet sind, die in Kontakt mit korrespondierenden Kontaktflächen der jeweiligen optischen Vorrichtung treten können. In besonders einfachen Fällen kommen dabei die jeweils korrespondierenden Kontaktflächen des jeweiligen elektronischen Kupplungsmittels und der jeweiligen optischen Vorrichtung mit einander in Kontakt. Das bedeutet, dass die Kontaktflächen aufeinander zum liegen kommen, so dass ein elektronischer Kontakt hinsichtlich des Austauschs von Signalen oder die Herstellung einer elektrischen Verbindung möglich ist. Dabei sind die Kontaktflächen, wie grundsätzlich alle Kontaktabschnitte der elektronischen Kupplungsmittel aus einem elektrisch leitenden Material gefertigt.

Bei Ausführungsformen, bei denen die elektrischen Kupplungsmittel mehrere Kontaktflächen, bzw. mehrere Kontaktabschnitte aufweist, ist es vorteilhaft, wenn die Anordnung dieser Kontaktabschnitte oder Kontaktflächen asymmetrisch ist. Eine derartige asymmetrische Ausbildung hat den Vorteil, dass ein fehlerhaftes Verbinden, also ein fehlerhaftes Kuppeln der elektronischen Kupplungsmittel vermieden ist. Dies ist insbesondere bei Einsatzsituationen wichtig, bei welchen ein Stromkreis, also eine elektrische Verbindung, hergestellt werden soll, um einen Kurzschluss zu vermeiden.

Eine alternative Ausführungsform kann elektronische Kupplungsmittel vorsehen die bei wenigstens einer Kupplungsvorrichtung durch Steckverbindungen gebildet sind. Solche Steckverbindungen sind dabei zum Beispiel mit einer Schnapprastverbindung ausgestattet, die ein reversibles Einrasten der hergestellten elektronischen Kupplung ermöglicht. Auf diese Weise ist ein versehentliches Trennen der elektronischen Kupplung weitestgehend ausgeschlossen. Insbesondere in Einsatzsituationen, in welchen hohe mechanische Belastungen auf die erfindungsgemäße Verbindungsbrücke und die Kupplungsvorrichtung wirken können, ist das Absichern der elektronischen Kupplung von Vorteil. Ein versehentliches Entkoppeln der optischen Vorrichtungen, was im schlimmsten Fall zu einem Ausschalten der jeweiligen optischen Vorrichtung, zum Beispiel bei einem Nachtsichtgerät zum Abdunkeln des Sichtfeldes, führen würde, wird damit vermieden.

Die Auswertevorrichtung bei einer Ausführungsform der vorliegenden Erfindung wertet dabei von den elektronischen Kupplungsmitteln empfangene Signale hinsichtlich wenigstens einem der folgenden Parameter aus:
▪ Batteriestatus der optischen Vorrichtungen
▪ Umgebungsparameter der optischen Nutzungssituation
▪ Restlichtmenge

Die voran stehende Aufzählung ist dabei keinesfalls abschließend, sondern enthält nur beispielhaft verschiedene Möglichkeiten die Verbindungsbrücke der vorliegenden Erfindung mit Zusatznutzen und damit höherem Komfort für den Benutzer auszustatten. Beim Vorsehen der Auswertung des Batteriestatus wird dabei der aktuelle Ladezustand der jeweiligen Batterie in jeder optischen Vorrichtung ausgelesen, also über den Austausch von Signalen über die elektronischen Kupplungsmittel erfasst und ausgewertet. Das Auswerten erfolgt dabei zum Beispiel hinsichtlich der ermittelten Restlaufzeit der jeweiligen Batterie und damit hinsichtlich der Restnutzungszeit der jeweiligen optischen Vorrichtung. Dabei kann bei unterschiedlichen Restnutzungszeiten der beiden optischen Vorrichtungen ein Ausgleich über die Auswertevorrichtung durchgeführt werden. Das bedeutet, dass die Auswertevorrichtung über die elektronischen Kupplungsmittel eine elektrische Verbindung zu der jeweiligen optischen Vorrichtung und damit zur der jeweiligen Batterie herstellt. Die stärke Batterie, also die Batterie mit höherem Ladezustand unterstütz dabei die schwächere Batterie, so dass die Restnutzungszeit der einen optischen Vorrichtung sich reduziert und die er anderen optischen Vorrichtung sich verlängert. Die Gesamtnutzungszeit des optischen Systems wird damit verlängert da ein Einsatz mit nur einer optischen Vorrichtung einen erheblichen Komfortmangel darstellt.

Bei der Auswertung von Umgebungsparametern kann zum Beispiel die Helligkeit der Umgebung gemessen werden und die jeweilige Verstärkungsweise und der jeweilige Verstärkungsgrad der optischen Vorrichtungen in Form von Nachtsichtgeräten angepasst werden. Bei ansteigender Helligkeit kann dabei von der Auswertevorrichtung der Grad der Verstärkung heruntergeregelt werden, während bei abnehmender Helligkeit, insbesondere bei unzureichender Restlichmenge, eine Infrarotlampe zugeschaltet werden kann. Diese Infrarotlampe kann dabei an einer optischen Vorrichtung oder auch an beiden optischen Vorrichtungen vorgesehen oder sogar integral mit diesen ausgeführt sein.

Neben dem Vorsehen einer Auswertevorrichtung ist auch eine Regelvorrichtung vorhanden die mit der Auswertevorrichtung elektronisch zum Austausch von Signalen verbunden ist und in Abhängigkeit der Signale von der Auswertevorrichtung wenigstens eine der optischen Vorrichtungen regelt. Die Regelung kann dabei zum Beispiel wie im voran stehenden Absatz beschrieben durchgeführt werden.

Je nach Ausgestaltungsform der erfindungsgemäßen Verbindungsbrücke kann es vorteilhaft sein, wenn die mechanischen Kupplungsmittel wenigstens einer Kupplungsvorrichtung derart ausgestaltet sind, dass die Position der jeweiligen optischen Vorrichtung relativ zur Verbindungsbrücke in axialer Richtung entlang der optischen Achse der jeweiligen optischen Vorrichtung einstellbar ist. Die optische Achse der Vorrichtung ist dabei durch die Sichtlinie, also die Hauptsichtachse der jeweiligen optischen Vorrichtung definiert. Mit anderen Worten kann auf diese Weise der Abstand zum Auge eines Benutzers von der optischen Vorrichtung variiert werden. Diese Variation kann zum Beispiel durch das Variieren eines Anschlages in einer Führung der mechanischen Kupplungsmittel ausgebildet sein.

Ein weiterer Gegenstand der vorliegenden Erfindung ist ein optisches System mit einer erfindungsgemäßen Verbindungsbrücke und zwei optischen Vorrichtungen. Die optischen Vorrichtungen weisen ebenfalls jeweils eine Kupplungsvorrichtung mit mechanischem Kupplungsmittel und elektronischem Kupplungsmittel auf, die für die mechanische und die elektronische Kupplung mit der Kupplungsvorrichtung der Verbindungsbrücke ausgestaltet sind.

Mit anderen Worten sind die mechanischen Kupplungsmittel und die elektronischen Kupplungsmittel der jeweiligen Kupplungsvorrichtung der optischen Vorrichtungen und der Verbindungsbrücke komplementär, bzw. korrespondierend ausgestaltet. Damit lässt sich ein optische System erzielen, welches sämtlich Vorteile mit sich bringt, wie sie zu den einzelnen Ausführungsform der erfindungsgemäßen Verbindungsbrücke bereits ausführlich erläutert worden sind.

Ein derartiges erfindungsgemäßes optisches System weist dabei optische Vorrichtungen insbesondere in Form von Nachtsichtgeräten auf. Diese Nachtsichtgeräte sind dabei zum Beispiel in Form von Restlichtverstärkern ausgebildet. Da diese Nachtsichtgeräte komplexe Vorrichtungen sind, die insbesondere über eine Stromversorgung mittels Batterie verfügen, kommen die Vorteile der vorliegenden Erfindung besonders intensiv zur Geltung. Sowohl eine gewichtsreduzierte Ausführung, wie auch eine verlängerte Nutzungsdauer erhöhen den Komfort eines derartigen optischen Systems.

Bei der Verwendung von optischen Vorrichtungen in Form von Nachtsichtgeräten kann es weiter von Vorteil sein, wenn zumindest eines dieser der Nachtsichtgeräte mit einer zuschaltbaren Lichtquelle versehen ist. Diese zuschaltbare Lichtquelle dient dazu bei zu geringer Restlichmenge ein ausreichend helles Bild zu ermöglichen. Um den Benutzer eines erfindungsgemäßen optischen Systems vor Entdeckung zu schützen ist dabei diese Lichtquelle vorzugsweise im für das menschliche Auge nicht sichtbaren Wellenlängenbereich ausgebildet. Zum Beispiel ist die Verwendung einer Infrarotlampe denkbar. Die Lichtquelle, zum Beispiel in Form von Infrarotlicht, kann dabei als besonders leichte Ausführungsform als LED ausgeführt sein. Neben dem besonders geringen Gewicht ist dabei der geringe Stromverbrauch einer LED als Lichtquelle vorteilhaft, da diese damit nur in geringem Maße die Stromversorgung, also die Batterie des jeweiligen Nachtsichtgerätes belastet.

Allerdings können bei einem erfindungsgemäßen optischen System auch stärkere Infrarotlampen zum Einsatz kommen, da der erhöhte Stromverbrauch dieser stärkeren Lampen über die Auswertevorrichtung und die elektronischen Kupplungsmittel von beiden Batterien der beiden Nachtsichtgeräte gespeist werden kann. Damit ermöglicht erst die Verwendung eines erfindungsgemäßen optischen Systems einen solchen Einsatz der Infrarotlampe mit hohem Stromverbrauch mit gleichzeitig annehmbarer Nutzungsdauer.

Vorteilhafter Weise sind die elektronischen Kupplungsmittel der optischen Vorrichtungen bei einem erfindungsgemäßen optischen System asymmetrisch ausgebildet. Dies ermöglicht es, dass beim mechanischen Kuppeln der optischen Vorrichtungen mit der Verbindungsbrücke ein falsches Verbinden der elektronischen Kupplungsmittel beider Komponenten vermieden wird. Insbesondere ein Kurzschluss wird auf diese Weise verhindert.

Die Erfindung wird näher erläutert anhand der beigefügten Zeichnungsfigur. Die bei der Beschreibung der Figur verwendeten Begriffe "links", "rechts", "oben", "unten" beziehe sich dabei auf die Zeichnungsfigur in einer Ausrichtung mit normal lesbaren Bezugszeichen. Es zeigt:

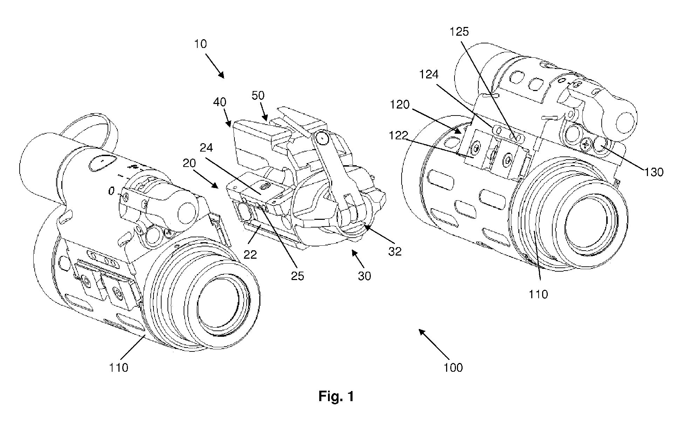

- Fig. 1: eine Ausführungsform eines erfindungsgemäßen optischen Systems mit einer erfindungsgemäßen optischen Verbindungsbrücke

In Fig. 1 ist eine Ausführungsform der vorliegenden Erfindung dargestellt. Insbesondere ist ein optisches System 100 gezeigt, welches in unmontiertem, also ungekuppeltem Zustand eine erfindungsgemäße Verbindungsbrücke 10 und zwei optische Vorrichtungen 110 in Form von Nachtsichtgeräten aufweist. Die Nachtsichtgeräte sind dabei als Restlichtverstärker ausgestaltet. Nachfolgend soll die Funktionalität der Verbindungsbrücke 10 alleine, wie auch im Zusammenhang mit den optischen Vorrichtungen 110 erläutert werden.

Die Verbindungsbrücke 10 ist in Fig. 1 im ungekuppelten Zustand dargestellt. Sie weist an beiden Seiten jeweils eine Kupplungsvorrichtung 20 auf, von denen eine in der Fig. 1 zu erkennen ist. Jede dieser beiden Kupplungsvorrichtungen 20 weist mechanische Kupplungsmittel 22 und elektronische Kupplungsmittel 24 auf, die jeweils zur Kupplung mit den optischen Vorrichtungen 110 dienen. Die mechanischen Kupplungsmittel 22 sind dabei als Schwalbenschwanzführung ausgebildet.

Die beiden optischen Vorrichtungen 110 weisen jeweils ebenfalls zwei Kupplungsvorrichtungen 120 auf, wobei jeweils eine Kupplungsvorrichtung 120 pro optischer Vorrichtung 110 in Fig.1 zu erkennen ist. Das Vorsehen von zwei Kupplungsvorrichtungen 120 pro optischer Vorrichtung 110 ermöglicht es, jede optische Vorrichtung 110 universell an der linken oder an der rechten Seite der Verbindungsbrücke 10 zu kuppeln.

Jede der Kupplungsvorrichtungen 120 der beiden optischen Vorrichtungen 110 weist dabei ebenfalls mechanische Kupplungsmittel 122 und elektronische Kupplungsmittel 124 auf. Die Kupplungsmittel 122 und 124 der Kupplungsvorrichtungen 120 sind dabei an die Kupplungsmittel 22 und 24 der Verbindungsbrücke 10 angepasst. So sind die mechanischen Kupplungsmittel 122 der optischen Vorrichtungen 110 jeweils als Schwalbenschwanzprofil ausgebildet. Dieses Schwalbenschwanzprofil kann in die Schwalbenschwanzführung der mechanischen Kupplungsmittel 22 der Verbindungsbrücke 10 eingeschoben werden. Dabei findet dieses Schieben entlang der optischen Achse der jeweiligen optischen Vorrichtung 110 statt. Durch einen nicht näher dargestellten Anschlag in dem mechanischen Kupplungsmittel 22 der Verbindungsbrücke 10 ist die Position der optischen Vorrichung 110 relativ zu dieser optischen Achse festlegbar.

Die Schwalbenschwanzführung wirkt zusammen mit dem Schwalbenschwanzprofil über Formschluss zwischen der Kupplungsvorrichtung 20 der Verbindungsbrücke 10 und der Kupplungsvorrichtung 120 der optischen Vorrichtung 110. Der Formschuss fungiert auch als Kraftschluss. Mit andern Worten ist auf diese Weise die optische Vorrichtung 110 in dem mechanischen Kupplungsmittel 20 der Verbindungsbrücke 10 gelagert.

Um die Lagerung der optischen Vorrichtung 110 noch weiter zu verbessern, ist bei der Ausführungsform gemäß Fig. 1 ein Fixiermittel 32 an der Verbindungsvorrichtung 30 der Verbindungsbrücke 10 vorgesehen. Dieses Fixiermittel 32 ist dabei als Arretierplatte mit einem Spannhebel ausgebildet. Die Position dieses Fixiermittels 32 ist in Fig. 1 in geschlossener Form dargestellt.

Zum Einschieben der optischen Vorrichtungen 110, also zum Kuppeln dieser mit der Verbindungsbrücke 10, wird der Spannhebel des Fixiermittels 32 gespannt, also in Fig. 1 nach rechts vorne bewegt. Anschließend kann die Arretierplatte des Fixiermittels 32 um 90° gedreht werden und gibt so den Zugang zu den mechanischen Kupplungsmitteln 22 der Verbindungsbrücke 10 frei. Die Schwalbenschwanzprofile der optischen Vorrichtungen 110 können aufgeschoben und damit die mechanische Kupplung hergestellt werden. Nachfolgend wird die Arretierplatte wieder um 90° geschwenkt und blockiert in dieser Position die mechanischen Kupplungsmittel 22 der Verbindungsbrücke 10, bzw. die mechanischen Kupplungsmittel 122 der optischen Vorrichtung 110 im mechanisch gekuppelten Zustand. Die optische Vorrichtung 110 ist in diesem Zustand statisch bestimmt gelagert.

Neben den mechanischen Kupplungsmitteln 22, bzw. 122 sind sowohl bei den optischen Verbindungsvorrichtungen 110, als auch bei den Verbindungsbrücken 10 elektronische Kupplungsmittel 24, bzw. 124 vorgesehen. An beiden Komponenten, also an den optischen Vorrichtungen 110, wie auch an der Verbindungsbrücke 10 sind diese elektronischen Kupplungsmittel 24 und 124 als drei flächig ausgebildete Kontaktpunkte 125 vorgesehen. Die Anordnung dieser drei Kontaktpunkte 125 ist jeweils asymmetrisch, so dass ein falsches Verbinden, also ein falsches elektronisches Kontaktieren ausgeschlossen ist.

Die elektronischen Kupplungsmittel 24 und 124 sind dabei derart angeordnet, dass sie automatisch miteinander in Kontakt treten, sobald die mechanischen Kupplungsmittel 22 und 122 miteinander gekuppelt worden sind. Die relative Position der optischen Vorrichtungen 110 zu der Verbindungsbrücke 10 und damit auch die relative Position der elektronischen Kupplungsmittel 24 uns 124 zueinander ist dabei, einerseits durch die Schwalbenschwanzführung, andererseits durch die Kombination aus einem Anschlag und dem Fixiermittel 32 sichergestellt. Damit ergibt sich für die elektronischen Kupplungsmittel 124 der optischen Vorrichtungen 110 in mechanisch gekuppeltem Zustand nur eine einzige definierte Position relativ zu den elektronischen Kupplungsmitteln 24 der Verbindungsbrücke 10. Auf diese Weise kann durch die exakt definierte Positionierung in Abhängigkeit der mechanischen Kupplungsmittel 22 und 122 automatisch auch die elektronische Kupplung hergestellt werden.

Nicht näher dargestellt sind die Auswertevorrichtung 40 und die Regelvorrichtung 50, die im Inneren der Verbindungsvorrichtung 30 der Verbindungsbrücke 10 angeordnet sind. Diese sind beide in dieser Ausführungsform als eine zentrale Rechnereinheit ausgeführt und stehen über die elektronischen Kupplungsmittel 24 der Verbindungsbrücke 10 im gekuppelten Zustand mit der elektronischen Kupplungsvorrichtung 124 der jeweiligen optischen Vorrichtung 110 in Verbindung. Dabei kann neben einem reinen Signalaustausch auch eine elektrische Verbindung zwischen den beiden optischen Vorrichtungen 110 zueinander hergestellt werden, so dass zum Beispiel ein Austausch, bzw. ein Unterstützen der optischen Vorrichtungen 110 gegenseitig bei schwacher Batterie möglich ist.

Die Verbindungsvorrichtung 30 ist dabei als mechanisch stabiles Gehäuse ausgebildet, das neben der mechanischen Verbindung der beiden Kupplungsvorrichtungen 20 auch die Einhausung der Auswertevorrichtung 40 und der Regelvorrichtung 50 übernimmt.

Weiter ist an der Verbindungsvorrichtung noch eine rein mechanische Schnittstelle vorgesehen, welche auf der Oberseite der Verbindungsvorrichtung 30 angebracht ist. Über diese rein mechanische Schnittstelle kann die Verbindungsbrücke 10 an einer Halterung, zum Beispiel an einem Helm oder an einer Kopfhalterung angebracht werden. Auf diese Weise kann der Benutzer eines solchen optischen Systems 100 dieses nutzen, ohne es mit den Händen in Position vor seinen Augen halten zu müssen. Diese mechanische Schnittstelle ist dabei ebenfalls als reversible Schnittstelle ausgebildet, so dass ein mehrfaches Anbringen und Abnehmen der Verbindungsbrücke 10 möglich ist. Dabei ist unerheblich, ob zum Zeitpunkt des Anbringens die optischen Vorrichtungen 110 bereits an der Verbindungsbrücke 10 angekuppelt sind oder nicht.

An beiden optischen Vorrichtungen 110 ist jeweils noch ein Batteriefach vorgesehen, welches auf der Oberseite der jeweiligen optischen Vorrichtung 110 angeordnet und auf der jeweiligen Hinterseite mit einem Deckel versehen ist. Weiter ist auch an jeder optischen Vorrichtung 110 eine zusätzlich Lichtquelle 130 vorgesehen, die bei der Ausführungsform der Fig. 1 als Infrarot LED ausgebildet ist. Diese wird im Falle nicht ausreichender Lichtverhältnisse für die Restlichverstärkung der optischen Vorrichtungen 110 eingeschaltet. Sie wird ebenfalls über die Batterie der jeweiligen optischen Vorrichtung 110 mit Strom versorgt.

### Bezugszeichenliste

- 10: Verbindungsbrücke
- 20: Kupplungsvorrichtung
- 22: mechanische Kupplungsmittel
- 24: elektronische Kupplungsmittel
- 25: Kontaktflächen
- 30: Verbindungsvorrichtung
- 32: Fixiermittel
- 40: Auswertevorrichtung
- 50: Regelvorrichtung
- 100: optisches System
- 110: optische Vorrichtung
- 120: Kupplungsvorrichtung
- 122: mechanische Kupplungsmittel
- 124: elektronische Kupplungsmittel
- 125: Kontaktflächen
- 130: Lichtquelle

## Patentansprüche

1. Verbindungsbrücke (10) zur Verbindung von zwei optischen Vorrichtungen (110) mit jeweils eigener Spannungsversorgung durch eine jeweils zugeordnete Batterie, wobei es sich bei den optischen Vorrichtungen (110) um Nachtsichtgeräte handelt, mit wenigstens einer Kupplungsvorrichtung (20) für jede optische Vorrichtung (110) zur Kupplung der jeweiligen optischen Vorrichtung (110) an die Verbindungsbrücke (10), die sowohl mechanische Kupplungsmittel (22), als auch elektronische Kupplungsmittel (24) aufweist, die derart angeordnet sind, dass die elektronischen Kupplungsmittel (24) einen elektronischen Kontakt zwischen der Verbindungsbrücke (10) und der jeweiligen optischen Vorrichtung (110) herstellen, wenn mittels der mechanischen Kupplungsmittel (22) ein mechanischer Kontakt zwischen der jeweiligen optischen Vorrichtung (110) und der Verbindungsbrücke (10) hergestellt ist, mit einer Verbindungsvorrichtung (30), die sich zumindest abschnittsweise zwischen den Kupplungsvorrichtungen (20) erstreckt und diese mechanisch miteinander verbindet, und mit einer Auswertevorrichtung (40) die mit den elektronischen Kupplungsmitteln (24) elektronisch verbunden ist und mit diesen elektronische Signale austauschen und/oder eine elektrische Verbindung zwischen den elektronischen Kupplungsmitteln (24) der Kupplungsvorrichtungen (20) herstellen kann, wobei eine Regelvorrichtung (50) vorhanden ist, die mit der Auswertevorrichtung (40) elektronisch zum Austausch von Signalen verbunden ist und in Abhängigkeit der Signale von der Auswertevorrichtung (40) wenigstens eine der optischen Vorrichtungen (110) regelt, **dadurch gekennzeichnet, dass** die Auswertevorrichtung (40) über die elektronischen Kupplungsmittel (24) eine elektrische Verbindung zu der jeweiligen Batterie der jeweiligen optischen Vorrichtung (110) herstellt und dass die Auswertevorrichtung (40) von den elektronischen Kupplungsmitteln (24) empfangene Signale hinsichtlich wenigstens einem der folgenden Parameter auswertet:
▪ Batteriestatus der optischen Vorrichtungen
▪ Umgebungsparameter der optischen Nutzungssituation
▪ Restlichtmenge.

2. Verbindungsbrücke (10) nach Anspruch 1, **dadurch gekennzeichnet, dass** die Verbindungsvorrichtung (30) über zumindest ein Rotationsgelenk mit wenigstens einer der Kupplungsvorrichtungen (20) derart verbunden ist, dass die derart verbundene Kupplungsvorrichtung (20) zumindest teilweise um die Rotationsachse des Rotationsgelenks relativ zur Verbindungsvorrichtung (30) rotieren kann.

3. Verbindungsbrücke (10) nach Anspruch 1, **dadurch gekennzeichnet, dass** die Verbindungsvorrichtung (30) über ein Rotationsgelenk mit den Kupplungsvorrichtungen (20) derart verbunden ist, dass die derart verbundenen Kupplungsvorrichtungen (20) zumindest teilweise um die Rotationsachse des Rotationsgelenks relativ zur Verbindungsvorrichtung (30) rotieren können.

4. Verbindungsbrücke (10) nach einem der vorangegangen Ansprüche, **dadurch gekennzeichnet, dass** die Verbindungsvorrichtung (30) über zumindest ein Translationsmittel mit wenigstens einer der Kupplungsvorrichtungen (20) derart verbunden ist, dass der Abstand der derart verbundenen Kupplungsvorrichtung (20) zu der Verbindungsvorrichtung (30) variierbar ist.

5. Verbindungsbrücke (10) nach einem der vorangegangenen Ansprüche, **dadurch gekennzeichnet, dass** das elektronische Kupplungsmittel (24) und das mechanische Kupplungsmittel (22) wenigstens einer Kupplungsvorrichtung (20) zumindest teilweise integral miteinander ausgeführt sind.

6. Verbindungsbrücke (10) nach einem der vorangegangenen Ansprüche, **dadurch gekennzeichnet, dass** das mechanische Kupplungsmittel (22) zumindest einer Kupplungsvorrichtung (20) wenigstens abschnittsweise als Schwalbenschwanzführung ausgeführt ist.

7. Verbindungsbrücke (10) nach einem der vorangegangenen Ansprüche, **dadurch gekennzeichnet, dass** Fixiermittel (32) vorgesehen sind zum Fixieren der mechanischen Kupplungsmittel (22) wenigstens einer Kupplungsvorrichtung (20) in deren mit der jeweiligen optischen Vorrichtung (110) gekoppelten Zustand.

8. Verbindungsbrücke (10) nach einem der vorangegangenen Ansprüche, **dadurch gekennzeichnet, dass** die elektronischen Kupplungsmittel (24) wenigstens einer Kupplungsvorrichtung (20) zumindest abschnittsweise durch Kontaktflächen (25) gebildet sind, die in Kontakt mit korrespondierenden Kontaktflächen (125) der jeweiligen optischen Vorrichtung (110) treten können.

9. Verbindungsbrücke (10) nach einem der Ansprüche 1 bis 7, **dadurch gekennzeichnet, dass** es sich bei den elektronischen Kupplungsmitteln (24) wenigstens einer Kupplungsvorrichtung (20) um Steckverbindungen handelt.

10. Verbindungsbrücke (10) nach einem der vorangegangenen Ansprüche, **dadurch gekennzeichnet, dass** weiter eine Regelvorrichtung (50) vorgesehen ist, die mit der Auswertevorrichtung (40) elektronisch zum Austausch von Signalen verbunden ist und in Abhängigkeit der Signale von der Auswertevorrichtung (40) wenigstens eine der optischen Vorrichtungen (110) regelt.

11. Verbindungsbrücke (10) nach einem der vorangegangenen Ansprüche, **dadurch gekennzeichnet, dass** die mechanischen Kupplungsmittel (22) wenigstens einer Kupplungsvorrichtung (20) derart ausgestaltet sind, dass die Position der jeweiligen optischen Vorrichtung (110) relativ zur Verbindungsbrücke (10) in axialer Richtung entlang der optischen Achse der jeweiligen optischen Vorrichtung (110) einstellbar ist.

12. Optisches System (100) mit einer Verbindungsbrücke (10) mit den Merkmalen eines der Ansprüche 1 bis 11 und zwei optischen Vorrichtungen (110), die jeweils eine Kupplungsvorrichtung (120) mit mechanischem Kupplungsmittel (122) und elektronischem Kupplungsmittel (124) aufweisen, die für die mechanische und die elektronische Kupplung mit der Kupplungsvorrichtung (20) der Verbindungsbrücke (10) ausgestaltet sind, wobei es sich bei den optischen Vorrichtungen (110) um Nachtsichtgeräte handelt.

13. Optisches System (100) nach Anspruch 12, **dadurch gekennzeichnet, dass** zumindest eines der Nachtsichtgeräte mit einer zuschaltbaren Lichtquelle (130) versehen ist.

14. Optisches System (100) nach einem der Ansprüche 12 oder 13, **dadurch gekennzeichnet, dass** die elektronischen Kupplungsmittel (124) der optischen Vorrichtungen (110) asymmetrisch ausgebildet sind.

## Claims

1. Connection bridge (10) for connecting two optical devices (110) with respectively their own voltage supply through a respective associated battery, wherein the optical devices (110) are night-vision devices, with at least one coupling device (20) for each optical device (110) for coupling the respective optical device (110) to the connection bridge (10), which has mechanical coupling means (22) as well as electronic coupling means (24) which are arranged so that the electronic coupling means (24) produce an electronic contact between the connecting bridge (10) and the respective optical device (110) when a mechanical contact between the respective optical device (110) and the connecting bridge (10) is produced by means of the mechanical coupling means (22), with a connecting device (30) that extends at least in sections between the coupling devices (20) and joins these mechanically to one another, and with an evaluation device (40) that is electronically connected to the electronic coupling means (24) and can exchange electronic signals with the latter and/or can produce an electrical connection between the electronic coupling means (24) of the coupling devices (20), wherein a regulating device (50) is provided that is connected electronically to the evaluation device (40) for the exchange of signals and depending on the signals from the evaluation device (40) regulates at least one of the optical devices (110), **characterised in that** the evaluation device (40) produces via the electronic coupling means (24) an electrical connection with the respective battery of the respective optical device (110) and that the evaluation device (40) evaluates signals received
from the electronic
coupling means (24) as regards at least one of the following parameters:
• battery status of the optical devices
• environmental parameters of the optical use situation
• residual amount of light.

2. Connecting bridge (10) according to claim 1, **characterised in that** the connecting device (30) is connected via at least one rotation joint to at least one of the coupling devices (20) so that the coupling device (20) connected in this way can rotate at least partially about the rotation axis of the rotation joint relative to the connecting device (30).

3. Connecting bridge (10) according to claim 1, **characterised in that** the connecting device (30) is connected via a rotation joint to the coupling devices (20) in such a way that the coupling devices (20) connected in this way can rotate at least partially about the rotation axis of the rotation joint relative to the connecting device (30).

4. Connecting bridge (10) according to one of the preceding claims, **characterised in that** the connecting device (30) is connected via at least one translation means to at least one of the coupling devices (20) so that the distance of the thereby connected coupling device (20) to the connecting device (30) can be varied.

5. Connecting bridge (10) according to one of the preceding claims, **characterised in that** the electronic coupling means (24) and the mechanical coupling means (22) of at least one coupling device (20) are formed at least partly integral with one another.

6. Connecting bridge (10) according to one of the preceding claims, **characterised in that** the mechanical coupling means (22) of at least one coupling device (20) is implemented at least in sections as a dovetail guide.

7. Connecting bridge (10) according to one of the preceding claims, **characterised in that** fixing means (32) are provided for fixing the mechanical coupling means (22) of at least one coupling means (22) of at least one coupling device (20) in their state coupled to the respective optical device (110).

8. Connecting bridge (10) according to one of the preceding claims, **characterised in that** the electronic coupling means (24) of at least one coupling device (20) are formed at least in sections by contact surfaces (25) that can be brought into contact with corresponding contact surfaces (125) of the respective optical device (110).

9. Connecting bridge (10) according to one of claims 1 to 7, **characterised in that** the electronic coupling means (24) of at least one coupling device (20) are plug-and-socket connections.

10. Connecting bridge (10) according to one of the preceding claims, **characterised in that** a regulating device (50) is furthermore provided, which is connected electronically to the evaluation device (40) for the exchange of signals and depending on the signals from the evaluation device (40) regulates at least one of the optical devices (110).

11. Connecting bridge (10) according to one of the preceding claims, **characterised in that** the mechanical coupling means (22) of at least one coupling device (20) are configured so that the position of the respective optical device (110) relative to the connecting bridge (10) can be adjusted in the axial direction along the optical axis of the respective optical device (110).

12. Optical system (100) with a connecting bridge (10) having the features of one of claims 1 to 11 and two optical devices (110) that respectively have a coupling device (120) with mechanical coupling means (122) and electronic coupling means (124), which are configured for the mechanical and the electronic coupling with the coupling device (20) of the connecting bridge (10), wherein the optical devices (110) are night-vision devices.

13. Optical system (100) according to claim 12, **characterised in that** at least one of the night-vision devices is provided with a connectable light source (130).

14. Optical system (100) according to one of claims 12 or 13, **characterised in that** the electronic coupling means (124) of the optical devices (110) are formed asymmetrical.

## Revendications

1. Pont de liaison (10) pour relier deux dispositifs optiques (110) avec respectivement une alimentation en tension propre par une pile qui leur est respectivement affectée, dans lequel les dispositifs optiques (110) sont des appareils de vision nocturne, avec au moins un dispositif de couplage (20) pour chaque dispositif optique (110) pour coupler le dispositif optique respectif (110) au pont de liaison (10), qui présente autant des moyens de couplage (22) que des moyens de couplage électroniques (24), qui sont aménagés de sorte que les moyens de couplage électroniques (24) instaurent un contact électronique entre le pont de liaison (10) et le dispositif optique respectif (110) lorsqu'un contact mécanique entre le dispositif optique respectif (110) et le pont de liaison (10) est instauré à l'aide des moyens de couplage mécaniques (22), un dispositif de liaison (30), qui s'étend au moins par sections entre les dispositifs de couplage (20) et relie ceux-ci mécaniquement l'un à l'autre, et un dispositif d'exploitation (40) qui est connecté par voie électronique aux moyens de couplage électroniques (24) et échange avec ceux-ci des signaux électroniques, et/ou peut instaurer une connexion électrique entre les moyens de couplage électroniques (24) des dispositifs de couplage (20), dans lequel il est prévu un dispositif de régulation (50) qui est relié au dispositif d'exploitation (40) par voie électronique pour échanger des signaux et régule en fonction des signaux du dispositif d'exploitation (40) au moins l'un des dispositifs optiques (110), **caractérisé en ce que** le dispositif d'exploitation (40) instaure via les moyens de couplage électroniques (24) une connexion électrique avec la pile respective du dispositif optique respectif (110) et le dispositif d'exploitation (40) exploite des signaux reçus des moyens de couplage électroniques (40) concernant au moins l'un des paramètres suivants :
◆ un état de la pile des dispositifs optiques,
◆ des paramètres environnementaux de la situation d'exploitation optique,
◆ la quantité de lumière restante.

2. Pont de liaison (10) selon la revendication 1, **caractérisé en ce que** le dispositif de liaison (30) est relié via au moins une articulation de rotation à au moins l'un des dispositifs de couplage (20) de sorte que le dispositif de couplage (20) relié de la sorte puisse tourner au moins en partie autour de l'axe de rotation de l'articulation de rotation par rapport au dispositif de liaison (30).

3. Pont de liaison (10) selon la revendication 1, **caractérisé en ce que** le dispositif de liaison (30) est relié via une articulation de rotation aux dispositifs de couplage (20) de sorte que les dispositifs de couplage (20) reliés de la sorte puissent tourner au moins en partie autour de l'axe de rotation de l'articulation de rotation par rapport au dispositif de liaison (30).

4. Pont de liaison (10) selon l'une quelconque des revendications précédentes, **caractérisé en ce que** le dispositif de liaison (30) est relié via au moins un moyen de translation à au moins l'un des dispositifs de couplage (20) de sorte que la distance du dispositif de couplage (20) lié de la sorte au dispositif de liaison (30) puisse être modifiée.

5. Pont de liaison (10) selon l'une quelconque des revendications précédentes, **caractérisé en ce que** le moyen de couplage électronique (24) et le moyen de couplage mécanique (22) d'au moins un dispositif de couplage (20) sont conçus mutuellement au moins en partie d'un seul tenant.

6. Pont de liaison (10) selon l'une quelconque des revendications précédentes, **caractérisé en ce que** le moyen de couplage mécanique (22) d'au moins un dispositif de couplage (20) est conçu au moins par sections sous la forme d'un guide en queue d'aronde.

7. Pont de liaison (10) selon l'une quelconque des revendications précédentes, **caractérisé en ce qu'**il est prévu des moyens de fixation (32) pour fixer les moyens de couplage mécaniques (22) d'au moins un dispositif de couplage (20) dans leur état couplé avec le dispositif optique respectif (110).

8. Pont de liaison (10) selon l'une quelconque des revendications précédentes, **caractérisé en ce que** les moyens de couplage électroniques (24) d'au moins un dispositif de couplage (20) sont formés au moins par sections par des surfaces de contact (25), qui peuvent venir en contact avec des surfaces de contact correspondantes (125) du dispositif optique respectif (110).

9. Pont de liaison (10) selon l'une quelconque des revendications 1 à 7, **caractérisé en ce que en ce que** les moyens de couplage électroniques (24) d'au moins un dispositif de couplage (20) sont des raccords d'enfichage.

10. Pont de liaison (10) selon l'une quelconque des revendications précédentes, **caractérisé en ce qu'**il est prévu en outre un dispositif de régulation (50) qui est connecté au dispositif d'exploitation (40) par voie électronique pour échanger des signaux et régule en fonction des signaux du dispositif d'exploitation (40) au moins l'un des dispositifs optiques (110).

11. Pont de liaison (10) selon l'une quelconque des revendications précédentes, **caractérisé en ce que** les moyens de couplage mécaniques (22) d'au moins un dispositif de couplage (20) sont conçus de sorte que la position du dispositif optique respectif (110) par rapport au pont de liaison (10) puisse être réglée dans la direction axiale le long de l'axe optique du dispositif optique respectif (110).

12. Système optique (100) pourvu d'un pont de liaison (10) ayant les caractéristiques de l'une des revendications 1 à 11 et de deux dispositifs optiques (110), qui présente respectivement un dispositif de couplage (120) avec des moyens de couplage mécaniques (122) et des moyens de couplage électroniques (124), qui sont conçus pour le couplage mécanique et le couplage électronique avec le dispositif de couplage (20) du pont de liaison (10), dans lequel les dispositifs optiques (110) sont des appareils de vision nocturne.

13. Système optique (100) selon la revendication 12, **caractérisé en ce qu'**au moins l'un des appareils de vision nocturne est pourvu d'une source de lumière commutable (130).

14. Système optique (100) selon l'une quelconque des revendications 12 ou 13, **caractérisé en ce que** les moyens de couplage électroniques (124) des dispositifs optiques (110) sont conçus de manière asymétrique.
